# DEMANDE DE BREVET EUROPEEN

(11) **EP 2 682 257 A1**
(43) Date de publication de la demande: **08.01.2014**
(21) Numéro de dépôt: 13305942.8
(22) Date de dépôt: 03.07.2013
(51) Int. Cl.: B29C 70/48, B29C 33/30

(54) **Procédé et dispositif de fabrication de pièces en matériau composite par RTM**

(30) Priorité: 04.07.2012 FR 1256433
(71) Demandeur: Stratime Composites Systemes, 02460 La Ferte-Milon (FR)
(72) Inventeur: Cappello, Carlo, 02290 Berny Riviere (FR)
(74) Mandataire: Demoly, Pascale

(57) **Abrégé**

Procédé et dispositif de fabrication de pièces en matériau composites par la technologie de moulage par transfert de résine (RTM), selon lequel on injecte la résine liquide dans l'entrefer ménagé entre les deux parties, matrice et poinçon, d'un moule, chaque partie (1, 2) du moule comportant un corps rigide (11) et présentant par ailleurs une paroi interne délimitant l'entrefer et dont la forme détermine la géométrie de la pièce fabriquée. Pour fabriquer des pièces (3a, 3b, 3c) de formes différentes, on réalise différentes coques (2a, 2b) amovibles interchangeables, adaptables respectivement dans l'une et/ou l'autre partie du moule, chaque coque présentant une face (21) de forme adaptée à la forme d'une pièce (3) à réaliser et constituant une des dites parois internes, et on remplace les coques dans le moule en fonction des pièces à fabriquer.

## Description

La présente invention concerne un nouveau procédé et dispositif de fabrication de pièces en matériau composites par la technologie de moulage par transfert de résine, encore appelée moulage par injection de résine liquide, et communément désignée par les initiales de son appellation en anglais : RTM (Resin Transfert Molding).

Par matériau composite, on entend ici de manière générale tous matériaux à base de résine de synthèse renforcée de fibres diverses.

Le RTM est une des différentes technologies connues pour la réalisation de pièces en matériau composite, typiquement des pièces s'étendant essentiellement selon une surface, plane ou non, mais présentant donc globalement une épaisseur relativement faible par rapport aux autres dimensions. Ces différentes technologies nécessitent toutes la construction d'outillages, ou moules, pour la transformation et la mise en forme des résines de synthèses. Ces outillages sont très coûteux et imposent des phases de fabrication assez longues suivant les types de technologie retenus, et limitent ainsi, pour certaines gammes de produits réalisés en petites séries, le développement des matériaux composites.

Le RTM, dont des exemples sont décrits notamment dans les documents FR2763879 et FR2864801, consiste à réaliser les pièces par formage dans un moule fermé dans lequel la résine liquide est injectée, sous basse pression et/ou avec l'assistance d'un vide créé dans le moule.

Plus précisément, dans la technique du RTM, la résine liquide est injectée dans l'entrefer entre une première partie de moule appelée matrice, et une seconde partie appelée poinçon, la matrice et le poinçon étant tous deux rigides et conçus pour être assemblés et maintenus en pression l'un contre l'autre, de manière étanche à l'exception des éventuels évents dans le cas où le moule ne comporte pas de mise sous vide de l'entrefer. Préalablement à l'injection de résine, le matériau de renfort, mat ou tissu de fibres, est disposé a sec dans l'entrefer, avant la fermeture du moule. Une fois le moule fermé, la résine liquide ou pâteuse est introduite sous faible pression dans le moule, en imprégnant le renfort, jusqu'au remplissage complet de l'entrefer. Après polymérisation et durcissement de la résine, le moule est ouvert et la pièce démoulée. Chacun de ces moules ne permet la réalisation que d'une seule et unique géométrie de pièce.

Pour réduire les coûts lors de fabrication de moyennes séries, il a déjà été proposé, comme indiqué dans les documents précités, d'utiliser des parties amovibles, ou coques, constituant les parois internes du moule. Ceci permet de conserver les outils en bon état tout au long d'une campagne de fabrication, par un renouvellement uniquement de ces coques. Ainsi, la structure générale du moule, qui lui confère sa rigidité et la géométrie de la pièce à fabriquer, peut être conservée ; les coques constituent des pièces d'usure remplaçables, peu coûteuses car de faible épaisseur et donc de peu de volume de matière, et sans besoin de grande résistance mécanique.

Ainsi, le RTM permet, grâce à des coûts d'investissement réduits et des cadences de production relativement courtes, de réaliser industriellement, en moyennes séries, par exemple quelques milliers de pièces, et dans des conditions économiques acceptables, des pièces présentant des formes pouvant avoir une certaine complexité. Cependant, les investissements restent encore trop importants pour les petites séries, typiquement inférieures à une centaine de pièces.

Ce handicap technico-économique est d'autant plus pénalisant et regrettable dans le cas de l'industrialisation ou de la création d'une gamme de produits différents, mais présentant des similitudes de formes, dans la mesure où, jusqu'à présent, chaque type de pièces nécessite, avant tout, la production de son propre outillage spécifique. Autrement dit, des pièces similaires, qui ne diffèrent que par de minimes différences de forme, nécessitent quand même des moules différents. Or, les moules restent onéreux, ce qui dissuade de l'utilisation du RTM même pour de telles gammes de produits similaires.

Il a bien été déjà proposé, pour tenter de résoudre ce type de problème, de réaliser chaque partie de moule, matrice ou poinçon, en plusieurs éléments interchangeables, comme indiqué dans WO 97/31771. Pour réaliser une pièce déterminée, on choisit les éléments de moule correspondant aux différentes parties de la pièce, et on assemble côte à côte les éléments de moule sélectionnés, de manière que l'assemblage ainsi obtenu constitue un moule de forme correspondant à celle de la pièce désirée. Ce système permet donc d'utiliser les mêmes éléments de moule pour des pièces différentes mais présentant certaines parties ayant des formes identiques. Un inconvénient est que ce système ne peut s'appliquer que pour des pièces de forme particulière, adaptée à un tel système, puisque les formes au niveau des faces en contact de deux éléments doivent être identiques, pour assurer une continuité de surface, ou au moins doivent être déterminées pour s'associer conformément à la forme de la pièce à réaliser. Outre la complexité que ce système entraîne, et les limitations sur les formes des pièces à produire, ce système implique que chaque élément de moule doit avoir une résistance mécanique équivalent à celle d'un moule d'une seule pièce, et donc réalisé comme les moules habituels, en acier, avec la difficulté de réaliser, par les procédés courant de fabrication des moules métalliques, des formes complexes. Chaque élément est donc massif, lourd, coûteux à réaliser. La réalisation d'un moule par assemblage de différents éléments implique aussi que certains éléments peuvent être peu utilisés, alors que d'autres, correspondant à des parties de pièces identiques pour des pièces différentes, seront beaucoup utilisés, avec des problèmes de disponibilité de tels éléments pour constituer d'autres moules, et des problèmes plus fréquents d'usure et détérioration de ces éléments de moule. Pour garder une certaine souplesse d'utilisation de ces moules, il serait nécessaire d'avoir un nombre important d'éléments interchangeables pour assurer leur disponibilité, ce qui augmenterait considérablement le coût d'exploitation de ce système.

La présente invention a pour but de résoudre les problèmes évoqués ci-dessus, et vise en particulier à permettre l'utilisation de la technologie RTM pour la fabrication de pièces en petites séries, notamment lorsqu'il s'agit de fabriquer des gammes de pièces différentes mais présentant certaines formes communes, ou des gammes de pièces différentes dans lesquelles certaines pièces ont un volume inscriptible dans le volume de pièces de dimensions supérieures.

Avec ces objectifs en vue, l'invention a pour objet un procédé de fabrication de pièces en matériau composites par la technologie de moulage par transfert de résine (RTM), selon lequel on dispose dans l'entrefer ménagé entre les deux parties d'un moule, matrice et poinçon, un matériau de renfort à base de fibres, typiquement un mat de fibres de verre ou similaire, puis on injecte la résine liquide dans l'entrefer, chaque partie du moule comportant un corps rigide et présentant par ailleurs une paroi interne délimitant l'entrefer et dont la forme détermine la géométrie de la pièce fabriquée.

Selon l'invention, le procédé est **caractérisé en ce que**, pour fabriquer des pièces de formes différentes avec les mêmes corps de moule,
on réalise différentes coques, ou modules, amovibles interchangeables, adaptables respectivement dans l'un et/ou l'autre corps du moule,
chaque coque présentant une face de forme adaptée à la forme d'une pièce à réaliser et constituant une des dites parois internes,
et on remplace les coques dans le moule en fonction des pièces à fabriquer.

La forme de la face externe des coques est identique pour toutes les coques prévues pour être placées dans une des deux parties du moule. Elle est adaptée pour pouvoir être placée et maintenue dans un logement de forme prédéterminée correspondante, prévu à cet effet dans ladite partie de moule.

En fonction des pièces à réaliser, il sera possible d'utiliser les différentes coques sur seulement une seule partie du moule, par exemple le moule matrice, ou d'utiliser des jeux de deux coques appariées, respectivement pour la matrice et le poinçon.

Typiquement, une première coque, ou un premier jeu de coques, pourra être utilisé pour réaliser une première pièce de grande dimensions, les dimensions des coques étant adaptées à celles de la pièce, et les dimensions des logements desdites coques dans les corps du moule étant adaptées à celles de ces premières coques. D'autres coques seront utilisées pour réaliser des pièces de plus petites dimensions, tout en gardant le même encombrement extérieur que la ou les premières coques, de manière à pouvoir être placées dans le moule en lieu et place des premières coques. Les caractéristiques géométriques des corps de moule sont déterminées au début d'un projet de fabrication, en fonction de l'ensemble des pièces à fabriquer. Ce qui n'empêche pas de modifier ensuite les formes de certaines pièces, ou d'en ajouter d'autres, en se limitant à réaliser les coques correspondantes, et sans changer les autres éléments de l'outillage.

Le procédé selon l'invention est particulièrement intéressant dès lors que les pièces à fabriquer présentent des géométries voisines ou comportant certaines parties ayant des formes identiques ou voisines, permettant de conserver la même forme extérieure et le même encombrement extérieur des différentes coques, tout en limitant les différences d'épaisseur des coques. Ainsi, les différentes coques peuvent rester d'un poids limité, facilitant leur manutention, avec des épaisseurs réduites limitant la quantité de matière nécessaire pour ces coques, et donc leur coût. Une telle épaisseur réduite n'est pas préjudiciable pour la résistance et la pérennité d'usage de ces coques, puisque les contraintes mécaniques subies lors de la mise en oeuvre du procédé restent essentiellement supportées par les corps du moule. Le même moule pourra être utilisé pour la fabrication de nombreuses pièces dès lors que les formes des logements prévus pour y placer les coques restent de dimensions suffisantes, pour réaliser les pièces souhaitées, en laissant en tout point une épaisseur minimale de matière pour les coques.

Le procédé selon l'invention permet donc la production de pièces et/ou familles de pièces, principalement mais non limitativement des pièces essentiellement surfaciques, similaires mais de formes ou profils différents, réalisées en matériaux composites, et avec un seul et unique outillage de base comportant tous les éléments propres à assurer la résistance du moule et son exploitation. L'investissement est donc réduit de ce fait, puisque c'est cet outillage de base comportant les corps du moule qui représente la majeure partie du coût des moules. La présente invention permet la production de pièces de petites ou de grandes dimensions, typiquement de quelques décimètres carrés a plusieurs mètres carrés, de formes simples ou complexes. Les pièces qui peuvent être réalisées avec le procédé pourront avoir plusieurs mètres de longueur et de largeur pour des hauteurs de plusieurs dizaines de décimètres avec des formes et profils non seulement simples mais également en formes complexes. On pourra par exemple réaliser différentes pièces semi-cylindriques de grandes dimensions et de formes et profils différents, ou des jeux de panneaux globalement plans mais ayant des dimensions et formes extérieures différentes, ou avec des reliefs ou états de surface différents.

L'invention a aussi pour objet un dispositif de fabrication de pièces en matériau composites par la technologie de moulage par transfert de résine, comportant un moule en deux parties, respectivement une matrice et un poinçon, chaque partie du moule comportant un corps rigide et présentant par ailleurs une paroi interne délimitant un entrefer destiné à recevoir la résine injectée, et la forme des dites parois déterminant la géométrie de la pièce fabriquée,

Selon l'invention, le dispositif est **caractérisé en ce qu'il** est prévu un ensemble de coques présentant chacune une face de forme adaptée à la forme d'une pièce parmi différentes pièces à réaliser, la face de forme constituant une des dites parois internes, et au moins un des corps du moule comporte un logement de forme prédéterminée, adapté pour recevoir de manière amovible et interchangeable une quelconque des coques dudit ensemble de coques.

Les coques peuvent être prévues pour être interchangeables sur seulement une des deux parties du moule, ou sur les deux parties. Autrement dit, un ensemble de coques peut ne comporter que des coques adaptées pour être mises en place dans une première partie du moule, et l'autre partie du moule restant la même pour toutes les pièces à réaliser, et donc sans présenter de logement pour des coques interchangeables. Alternativement, un ensemble de coques peut comporter plusieurs jeux de deux coques interchangeables, chaque jeu comportant une coque adaptable sur une première partie du moule, et une autre coque adaptable sur l'autre partie du moule.

Ces coques, ou modules, sont réalisées soit par moulage suivant la technologie d'imprégnation manuelle, soit par moulage par injection de résine. Les matériaux utilisés pour ces modules ou coques seront des composites types verre + époxy ou verre + vinylesters a hautes caractéristiques mécaniques et thermiques et spécialement conçus pour la fabrication d'outillages.

Les coques peuvent être maintenues sur le corps de la partie correspondante de l'outillage commun soit par un système de fixation mécanique, soit par un système de dépression avec joints d'étanchéité, soit par un système d'électro-aimant. Tout autre moyen de maintien similaire peut aussi être utilisé, dès lors qu'il permet d'assurer le positionnement précis de la coque sur le corps du moule, et un remplacement aisé d'une coque par une autre, ce qui peut se faire à tout moment et cela plusieurs fois chaque jour afin de permettre la réalisation simultanément de pièces composites différentes.

D'autres caractéristiques et avantages apparaîtront dans la description qui va être faite de deux exemples de mise en oeuvre de l'invention pour la fabrication d'une part d'une gamme de panneaux composites, et d'autre part d'une gamme de pièces semi cylindriques destinées à constituer des tambours à gorges d'enroulement de câbles ou autres conduits flexibles.

On se reportera aux dessins annexés dans lesquels :
- la figure 1 est une vue en perspective d'un dispositif conforme à l'invention, où les coques et la pièce à fabriquer sont représentées séparées des corps du moule,
- la figure 2 illustre à titre d'exemple d'un ensemble de pièces à réaliser, une cabine destinée à accueillir du personnel,
- la figure 3 illustre une gamme de trois panneaux différents destinés à la réalisation de ladite cabine,
- la figure 4 illustre les deux coques d'un jeu de coques adaptées pour être utilisées ensemble dans le dispositif de la figure 1, pour la fabrication du troisième panneau de la gamme de panneau de la figure 3,
- la figure 5 illustre trois jeux de coques pour la fabrication de trois panneaux différents,
- la figure 6 illustre le maintien d'une coque sur un corps de moule par des moyens mécaniques,
- la figure 7 illustre le maintien d'une coque sur un corps de moule par des moyens magnétiques,
- la figure 8 illustre le maintien d'une coque sur un corps de moule par dépression,
- la figure 9 illustre un deuxième exemple de mise en oeuvre de l'invention pour la fabrication de demi-tambours à gorges,
- la figure 10 représente trois coques interchangeables différentes adaptables dans la partie inférieure du moule de la figure 9, pour la fabrication de trois tambours de différentes longueurs, avec des profils de gorges différents.

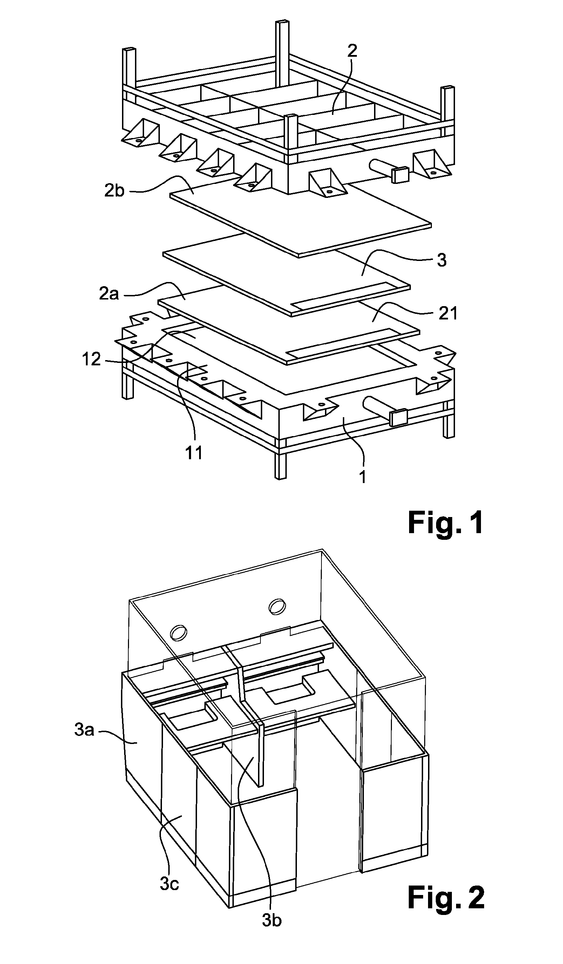

Le dispositif représenté figure 1 est un outillage de moulage comportant un corps de moule inférieur 1 et un corps de moule supérieur 2, tous deux comportant typiquement un châssis métallique 11 dans lequel est réalisé un logement 12 apte à recevoir sans jeu une coque d'un jeu de coques déterminant entre elles un entrefer. Cet entrefer constitue, lorsque le moule est fermé, une cavité ayant la forme de la pièce à réaliser, cavité dans laquelle la résine est injectée, de manière connue en soi, via des canaux d'injection formés dans le corps du moule, après avoir placé dans l'entrefer les tissus de renfort.

Dans l'exemple présenté, le corps de moule inférieur reçoit une coque inférieure 2a et le corps de moule supérieur reçoit une coque supérieure 2b. La face 21 de chaque coque orientée vers l'intérieur du moule, c'est-à-dire sur le dessus pour la coque inférieure 2a de l'exemple présenté, constitue une des parois internes de l'entrefer, et présente une forme et un relief correspondants à ceux de la pièce à réaliser 3.

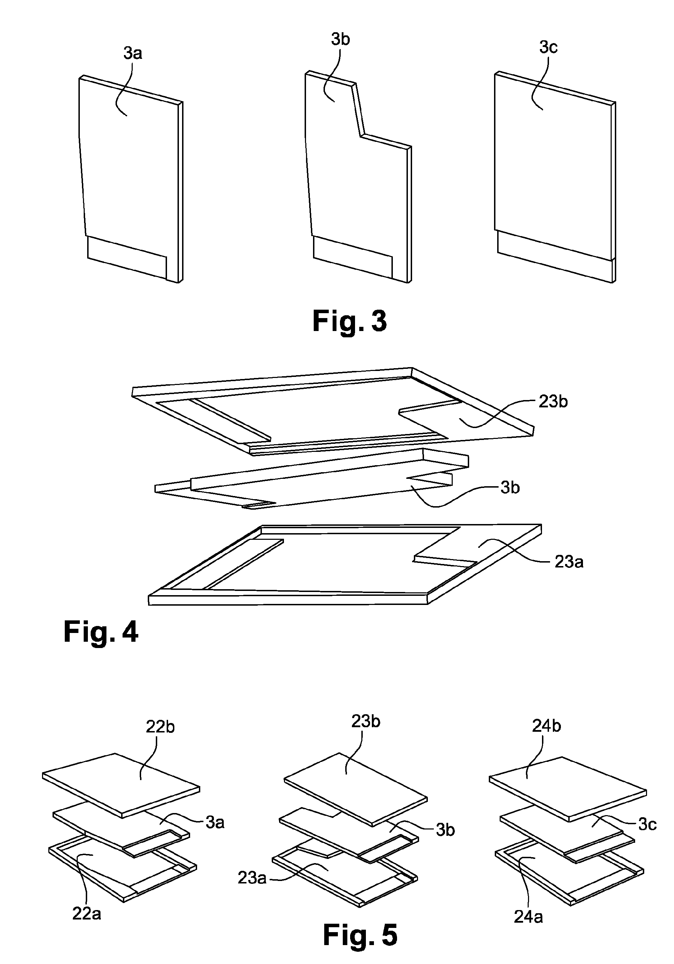

La figure 2 représente une cabine constituée notamment d'un assemblage de panneaux de différentes formes, tels que les panneaux 3a, 3b, 3c. Ces panneaux sont représentés individuellement figure 3, où on voit bien les similitudes de formes entre les différents panneaux. Le procédé selon l'invention peut être avantageusement utilisé pour fabriquer ces différents panneaux, en utilisant un seul outillage de base tel que présenté figure 1, et en prévoyant plusieurs jeux de coques 22a, 22b, 23a, 23b, 24a, 24b, représentés figure 5. Chaque jeu de coque permet de fabriquer un des panneaux. La figure 4 montre de manière plus détaillée les coques 23a, 23b servant à réaliser le panneau 3b. On distingue bien sur cette figure les formes en creux correspondant aux formes de la plaque 3b. Pour fabriquer les différents panneaux, il suffit de changer les jeux de coques dans le moule.

Typiquement, l'invention est mise en oeuvre de la manière suivante. Après avoir identifié les différentes pièces, telles que les plaques 3a, 3b, 3c, pouvant être fabriquées dans une même gamme en utilisant un seul outillage de base, on réalise le premier jeu de coques interchangeables, correspondant à la pièce de plus grande dimensions, sur la base d'un modèle de référence de cette pièce. Ces coques sont réalisées soit par moulage suivant la technologie d'imprégnation manuelle soit par moulage par injection de résine. Les matériaux utilisés pour ces coques seront des composites types verre + époxy ou verre + vinylesters a hautes caractéristiques mécaniques et thermiques et spécialement conçus pour la fabrication d'outillages.

Sur la base de ce premier jeu de coques, on réalise les corps 11, et en particulier les logements 12, des deux parties 1 et 2, matrice et poinçon, de l'outillage pour la technologie du RTM, outillage qui sera commun à toutes les autres coques. Ces deux parties seront renforcées mécaniquement grâce à la fixation d'un châssis métallique, par exemple en acier mécano-soudé, ou en aluminium de fonderie ou d'autres système structurels. Chaque partie du moule recevra les différentes buses d'injection nécessaires à l'introduction de la résine lors de la phase d'imprégnation.

Ensuite, prenant ces corps comme modèle pour définir les formes et dimensions extérieures de toutes les autres coques, et en substituant le premier modèle de pièce par un second modèle correspondant à une seconde pièce différente de la première, on réalise également par copiage le second jeu de coques interchangeables.

On pratique de la même façon afin de réaliser tous les jeux de coques suivants, nécessaires à la fabrication de toutes les pièces, qui seront ainsi utilisés avec le même outillage initial.

Par la suite, en cas de création de nouvelles pièces pouvant s'insérer, grâce à leurs formes et dimensions dans la gamme de pièce d'origine, on peut pratique de même pour réaliser les coques nécessaires à ces nouvelles pièces.

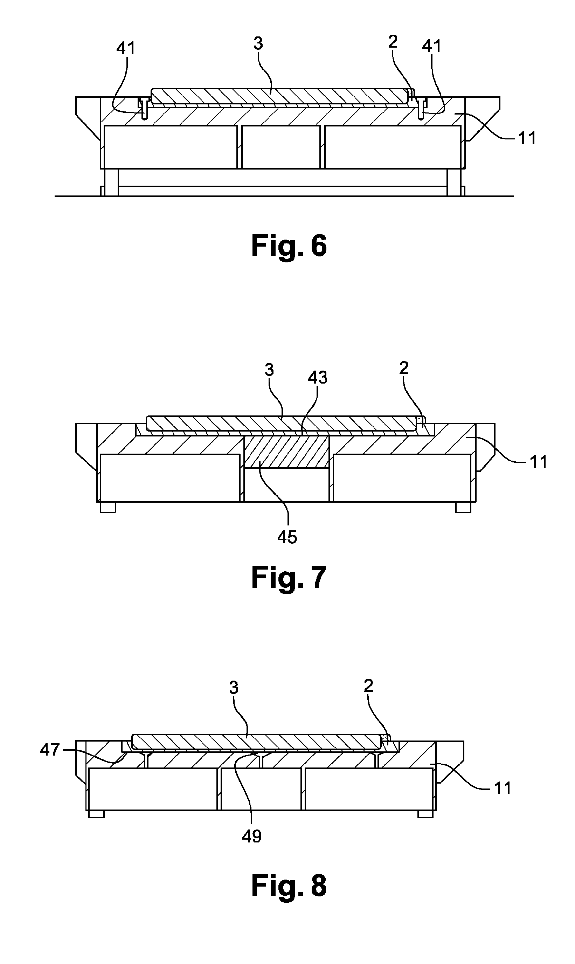

Comme représenté sur la figure 6, les coques 2 peuvent être fixées sur le corps du moule par des moyens mécaniques tels que des fixations vissées 41. Pour faciliter le changement de coques, on utilisera avantageusement des fixations rapides.

Un autre mode de maintien des coques sur le moule est une fixation magnétique, comme représenté figure 7. Dans cette variante, la coque 2 comporte une plaque de métal magnétique 43 intégrée dans la matière de la coque, et un électro-aimant 45 est placé dans le corps de moule, en regard de ladite plaque.

Un autre mode de maintien encore, représenté figure 8, consiste à maintenir la coque par dépression. A cette fin, on dispose un joint d'étanchéité périphérique 47 entre la coque 2 et le corps du moule 11, et par des conduits d'aspiration 49 débouchant dans le corps sous la coque, on crée une zone de dépression suffisante pour maintenir la coque plaquée contre le moule.

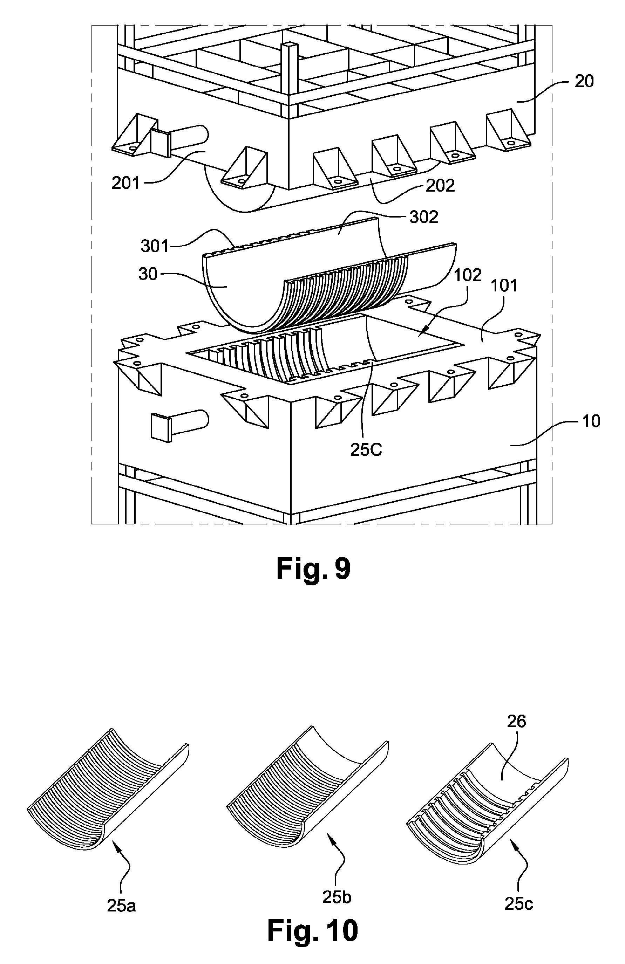

Les figures 9 et 10 illustrent un autre exemple de fabrication de pièces, conformément au procédé selon l'invention. La gamme de pièces de cet exemple est constituée de demi-tambours à gorges, ayant tous des diamètres identiques ou au moins voisins, mais dont la longueur axiale utile, c'est-à-dire la longueur cannelée, ainsi que le profil des gorges, sont différents d'une pièce à l'autre.

Le moule de base comporte un demi-moule inférieur, ou matrice, 10 et un demi-moule supérieure, ou poinçon, 20. Le corps 101 demi-moule inférieur comporte une empreinte en creux 102, adaptée pour recevoir différentes coques telles que les coques 25a, 25b, 25c représentées figure 10, destinées à réaliser lesdits demi-tambours, dont un exemple est représenté figure 9 par le demi-tambour 30, comportant une partie 301 avec des gorges de moyenne dimension en profil, et une partie d'extrémité lisse 302. Le corps 201 du demi-moule supérieur 20 comporte une partie semi cylindrique en relief 202, de diamètre égal au diamètre intérieur commun à toutes les pièces de la gamme, et de longueur égale à celle de l'empreinte 102 et donc de la longueur de la pièce la plus longue à réaliser.

Dans cet exemple, on n'utilise donc des coques interchangeables que pour le demi-moule inférieur.

Pour fabriquer les autres demi-tambours de la gamme, on utilisera des coques interchangeables adaptées aux formes de ceux-ci, par exemple les coques 25a, 25b, 25c représentées figure 10.

Pour obtenir des demi-tambours de longueur inférieure à la longueur maximale autorisée par l'empreinte 102 du demi-moule inférieur, on peut fabriquer une pièce telle que le demi-tambour 30 de la figure 9, et couper ensuite la partie lisse inutile. On peut aussi réaliser directement un demi-tambour de longueur réduite, en conformant une extrémité de la coque, par exemple la partie 26 de la coque 25c, avec une partie lisse de diamètre égal à celui de la partie semi-cylindrique 202 du demi-moule supérieur, de manière que, lorsque le moule est fermé, il n'y ait pas d'espace entre cette partie semi-cylindrique 202 en relief du demi-moule supérieur et la parti lisse 26 d'extrémité de la coque, et en conséquence la résine ne pourra s'insérer à cet endroit.

Les exemples de mise en oeuvre décrits précédemment ne sont nullement limitatifs de l'invention, qui pourra bien sûr être appliquée pour réaliser de très nombreuses pièces de diverses formes et dimensions. La seule limite étant, comme on l'aura compris, la possibilité d'adapter les coques aux différentes pièces à fabriquer, en respectant des formes et dimensions compatibles avec les coques utiles pour fabriquer les pièces de plus grandes dimensions, et sans conduire à utiliser des coques volumineuses et massives qui seraient nécessaires pour compenser les écarts dimensionnels entre des pièces de formes et dimensions trop différentes.

## Revendications

1. Procédé de fabrication de pièces en matériau composites par la technologie de moulage par transfert de résine (RTM), selon lequel on dispose dans l'entrefer ménagé entre les deux parties d'un moule, matrice et poinçon, un matériau de renfort à base de fibres, puis on injecte la résine liquide dans l'entrefer, chaque partie (1,2 ; 10,20) du moule comportant un corps rigide (11, 101, 201) et présentant par ailleurs une paroi interne délimitant l'entrefer et dont la forme détermine la géométrie de la pièce fabriquée, **caractérisé en ce que**, pour fabriquer des pièces (3a, 3b, 3c) de formes différentes avec les mêmes corps de moule, on réalise différentes coques (22a, 22b, 23a, 23b, 24a, 24b, 25a, 25b, 25c) amovibles interchangeables, adaptables respectivement dans l'un et/ou l'autre corps du moule, chaque coque présentant une face (21) de forme adaptée à la forme d'une pièce à réaliser et constituant une des dites parois internes, et on remplace les coques dans le moule en fonction des pièces à fabriquer.

2. Procédé selon la revendication 1, **caractérisé en ce qu'**on utilise différentes coques (25a, 25b, 25c) sur seulement une seule partie (10) du moule.

3. Procédé selon la revendication 1, **caractérisé en ce qu**'on utilise des jeux de deux coques appariées (22a, 22b, 23a, 23b, 24a, 24b) respectivement pour chaque partie (1, 2) du moule.

4. Dispositif de fabrication de pièces en matériau composites par la technologie de moulage par transfert de résine, comportant un moule en deux parties (1, 2 ; 10, 20), chaque partie du moule comportant un corps rigide et présentant par ailleurs une paroi interne délimitant un entrefer destiné à recevoir la résine injectée, et la forme des dites parois déterminant la géométrie de la pièce fabriquée, **caractérisé en ce qu'il** est prévu un ensemble de coques (22a, 22b, 23a, 23b, 24a, 24b, 25a, 25b, 25c) présentant chacune une face (21) de forme adaptée à la forme d'une pièce parmi différentes pièces à réaliser, la face de forme constituant une des dites parois internes, et au moins un des corps (11, 101) du moule comporte un logement (12, 102) de forme prédéterminée, adapté pour recevoir de manière amovible et interchangeable une quelconque des coques dudit ensemble de coques.

5. Dispositif selon la revendication 4, **caractérisé en ce que** les coques sont réalisées par moulage suivant la technologie d'imprégnation manuelle, ou par moulage par injection de résine.

6. Dispositif selon la revendication 4, **caractérisé en ce que** les coques sont réalisées en composites de types verre + époxy ou verre + vinylesters a hautes caractéristiques mécaniques et thermiques.

7. Dispositif selon la revendication 4, **caractérisé en ce que** les coques sont maintenues sur les corps de moule par un système de fixation mécanique (41), ou par un système de dépression (49) avec joints d'étanchéité (47), ou par un système d'électro-aimant (43, 45).
